# EUROPEAN PATENT APPLICATION

(11) **EP 2 733 560 A1**
(43) Date of publication of application: **21.05.2014**
(21) Application number: 12382454.2
(22) Date of filing: 19.11.2012
(51) Int. Cl.: G05D 1/00

(54) **Autonomous mission management**

(71) Applicant: The Boeing Company, Chicago, IL 60606-2016 (US)
(72) Inventor: Gomez Sanz, Jorge J., 28040 Madrid (ES); Molina, Roberto, 28006 Madrid (ES); Scarlatti, David, 28028 Madrid (ES); Montes, Carlos, 280840 Madrid (ES); Pavon, Juan, 28040 Madrid (ES); Fuentes, Ruben, 28040 Madrid (ES)
(74) Representative: Boult Wade Tennant

(57) **Abstract**

The present invention provides a distributed agent-based computer infrastructure configured to manage a mission of an unmanned vehicle that includes generating a mission plan and executing the mission plan. The computer infrastructure comprises an operator interface component, an autonomous mission management component and a vehicle systems interface component. The autonomous mission management component comprises agents configured for receiving information from an operator, for generating a mission plan from the received information including a path to be travelled, and for monitoring execution of the mission plan.

## Description

### Field of the Invention

The present invention relates to a distributed agent-based computer infrastructure configured to manage a mission of an unmanned vehicle and to a method of managing a mission of an unmanned vehicle.

### Background to the Invention

Systems and methods have been proposed for the autonomous mission management of unmanned vehicles. Unmanned vehicles usually require definition of a mission to operate. The mission, once defined, may be followed autonomously by the unmanned vehicle or may provide a plan for an operator to follow when controlling the unmanned vehicle remotely.

The mission is usually determined by tasks to be undertaken and/or objectives to be achieved. The mission is then defined with reference to constraints. The constraints usually relate to paths to be included in the mission and hazards to be avoided by the unmanned vehicle. Paths may include roads or airways to be used or zones to be visited along the mission. Among the hazards, there may be geographical ones, like terrain that may otherwise cause a crash; restricted areas, like population centres or enemy territory that should be avoided; and environmental factors, like a region with adverse weather conditions.

Computer infrastructures are known that receive as inputs descriptions of mission tasks and/or objectives and can access descriptions of constraints. These computer infrastructures then calculate optimal mission plans for the unmanned vehicles, including paths to be followed, and take into account the characteristics of the vehicle. This computation is fast enough to be useful for dealing with real time events. Also, the computer infrastructure is simple enough to fit within the unmanned vehicle, incrementing its autonomy in case of communication failure.

The mission plans are then executed, either autonomously by the unmanned vehicle or under the guidance of a remote operator. However, circumstances may change during the mission such that the plan can no longer be followed or such that better mission plans exist. For example, a new task or objective may require attention, the unmanned vehicle may develop a problem, another vehicle may come into close proximity, or a new threat to the safety of the unmanned vehicle may be detected. In these circumstances, the computer infrastructure must generate a new mission plan.

To date, such computer infrastructures are implemented using a centralised architecture, for example using a single computer carried by the unmanned vehicle.

### Summary of the Invention

From a first aspect, the present invention resides in a distributed agent-based computer infrastructure configured to manage a mission of an unmanned vehicle that includes generating a mission plan and executing the mission plan. The unmanned vehicle may be a land, air or water vehicle. The unmanned vehicle may be autonomous, or may be controlled remotely. The unmanned vehicle undertakes missions that may be defined according to tasks to be completed and/or objectives to be achieved.

The computer infrastructure comprises an operator interface component, an autonomous mission management component and a vehicle systems interface component. The computer infrastructure is implemented using distributed agents. Thus each component contains agents. The three components may be distributed relative to each other and may be distributed themselves (e.g. the autonomous mission management component may be distributed). Being agents, the computer infrastructure may contain replicated services which would enable servicing multiple parties. Also, the agent approach inherently includes a fault tolerance that permits other agents to assume the role of failing agents in a distributed computer infrastructure. Agents can act autonomously where they decide by themselves the best course of action, or may merely assist where they require humans to take the final decisions, depending on the configuration of the computer infrastructure.

The vehicles systems interface component is located with the unmanned vehicle and comprises a vehicle systems agent that is configured for interfacing with sensors and actuators provided on the unmanned vehicle. Thus the vehicle systems interface component is provided on or in the unmanned vehicle.

The operator interface component is located remote from the unmanned vehicle and comprises an operator personal agent configured for communicating with an operator. The operator may be located in a fixed position on the ground (e.g. in a building), or the operator may be mobile (e.g. in a mobile command centre provided by a land, water or air vehicle). The autonomous mission management component may be co-located with the operator interface component, or it may be remote from the operator interface component. The autonomous mission management component may be co-located with the vehicle systems interface component, or it may be remote from the vehicle systems interface component. At least part and, optionally, all of the autonomous mission management component is located remote from the unmanned vehicle.

The autonomous mission management component comprises a number of agents that provide a range of services. Some agents are managerial in nature and are used to manage other agents. Other agents are lower ranking and provide basic functions to the managerial agents. Some agents are configured for receiving information from an operator via the operator personal agent. Other agents are configured for generating a mission plan from the received information including a path to be travelled. Still other agents are configured for monitoring execution of the mission plan.

The mission plan generated may include actions to be performed upon arrival at designated locations. Generating the mission plan may include paying regard to tasks and/or objectives associated with the mission, and may pay regard to constraints. Constraints may include geographical limitations such as regions to be avoided, and/or weather conditions such as areas of inclement weather to be avoided.

During mission execution, the unmanned vehicle is monitored by the autonomous mission management component. This comprises monitoring both the operation of the unmanned vehicle itself, and also the environment around the vehicle. For example, the weather may be monitored, as well as changes to the geographical surroundings of the unmanned vehicle (e.g. to reflect changes in water levels due to tides). The presence of other vehicles may also be monitored. With respect to the unmanned vehicle, its own performance may be monitored for example to avoid fuel exhaustion. In addition, other factors affecting the unmanned vehicle such as a change to tasks and/or objectives associated with that unmanned vehicle may be monitored. The unmanned vehicle may monitor itself, or the unmanned vehicle may be monitored remotely, or combination of self-monitoring and remote monitoring may be used.

The computer infrastructure may further comprise memory associated with the operator personal agent having stored therein graphical user interface facilities configured for use by the operator personal agent to provide a graphical user interface with the operator. The graphical user interface may be used both to provide information to the operator and also to collect information from the operator. The graphical user interface facilities may be configured for use by the operator personal agent to provide a graphical representation of the mission plan to the operator, optionally including a graphical representation of the path to be travelled. Optionally, the display may include information describing the mission plan and a reason why the mission plan was selected. This provides clarity to the operator by providing details of the logic that led to the decision made. This allows an operator to check the planned mission to ensure it is safe and/or meets the tasks and objectives of the mission. The information may be used by an operator to accept or reject the mission plan, or to suggest amendments. The graphical user interface may provide a means for the operator to approve or reject the proposed mission plan.

The autonomous mission management component may comprise a director agent, a plan elaborator agent and a plan executor agent. These agents may all assume managerial roles where they designate and co-ordinate tasks to other agents. For example, the director agent may have an overall managerial role at the top of a hierarchy that sees the director agent direct both the plan elaborator agent and the plan executor agent. The director agent may also provide an interface between the autonomous mission management component and the other components. For instance, the director agent may be configured to communicate with the operator personal agent. The director agent may be configured to direct the plan elaborator agent to generate the mission plan. That is, the director agent may instigate the creation of the mission plan, for example upon receipt of a mission plan definition from the operator personal agent.

The plan executor agent may be configured to monitor execution of the mission plan. The plan executor agent may be configured to receive data from the vehicle systems agent that has been obtained from the sensors. This information may relate to the unmanned vehicle or to the environment around the unmanned vehicle. This information may be provided directly to the plan executor agent, or it may be provided via the director agent. Memory may be associated with the plan executor agent that contains mission monitoring and execution functions for use by one or more agents. The plan executor agent may be configured to (a) use one or more mission monitoring and execution functions to fuse data received from the vehicle systems agent and (b) to store the fused data in a data fusion structure. The plan executor agent may do this directly or indirectly, that is the plan executor agent may or may not instruct other agents to perform these tasks on its behalf.

The plan elaborator agent may be configured to identify conditions requiring amendment of the mission plan. This may be achieved from the data received from the vehicle systems agent, either direct from the data received or indirectly from the fused data stored in the data fusion structure. If conditions requiring amendment of the mission plan are identified, the plan elaborator agent may be configured to cause a new mission plan to be produced. For example, the plan executor agent may report to the director agent that in turn instigates the generation of a new or amended mission plan.

An amended mission plan may be generated that includes an amended path to be followed by the unmanned vehicle responsive to a trigger identified during monitoring of the unmanned vehicle. Examples of triggers are provided above where monitoring during the mission execution is described. A graphical representation of the amended mission plan including any amended path to be followed may be provided by the operator personal agent, in the same way as described above for the initial mission plan. The may contain information describing the amended mission plan and a reason why the amended mission plan was selected. This provides clarity to an operator as to how the computer infrastructure is functioning, for example by providing details of how a mission has been amended and providing details of the logic that led to the decision being made and why a particular amended path was selected. This information may be used by the operator to accept or reject an amended mission plan, or to suggest further amendments.

In the above method, the trigger that causes amendment of the mission plan may be information indicating that it is no longer possible to follow the defined path. Hence the trigger causes a new path to be calculated that it is possible for the unmanned vehicle to follow. The integrity of the vehicle may be taken into account while executing the plan, for example by providing default behaviours to be followed if no mission plan is available. Examples of default behaviours are to stay at the current position or to fly a holding pattern.

The computer infrastructure may be configured to execute the amended mission plan and to monitor execution of the amended mission plan.

The plan elaborator agent may be configured to instruct planning agents to elaborate mission plans. The plan elaborator agent may be configured to instruct navigation agents to provide the path to be travelled as part of the mission plans. The planning agents may be distributed and/or the navigation agents may be distributed. A single agent may serve as both a planning agent and a navigation agent. Memory may be provided that contains mission planning functions. The planning agents may be configured to use the mission planning functions to elaborate the mission plans. The navigation agents may be configured to use the mission planning functions providing navigation functions to provide the path to be travelled. The plan elaborator agent may delegate management of the navigation agents to a path finder agent.

The planning agents may be configured to use a mission definition stored in a mission definition component and data stored in the data fusion component when generating the mission plan. The mission definition may provide a framework for the mission, e.g. tasks to be undertaken and constraints to be followed during the mission. The data fusion component may contain information to augment the mission definition, e.g. weather data that may influence the navigation agents when determining the path to be followed.

The operator personal interface agent may be configured to receive information from the operator relating to the mission, for example via the graphical user interface. The operator personal interface may be configured to provide the information to the director agent, and the director agent may be configured to cause the information to be stored in the mission definition component.

When a mission plan has been generated, the plan elaborator agent may be configured to provide the mission plan to the director agent. The director agent may be configured to cause the mission plan to be stored in the mission plan component. The director agent may provide the mission plan to the operator personal agent for display to the operator. The plan executor agent may be configured to use the mission plan stored in the mission plan component during execution of the mission plan.

An advantage of using multiple different agents is that they may be used to generate different mission plans that may then be compared and a particular solution selected. To this end, the director agent may be configured to direct the plan elaborator agent to provide candidate mission plans. The plan elaborator agent may then instruct the planning agents and navigation agents to provide candidate mission plans each with a path to be travelled. This may be effected by the plan elaborator agent issuing a call for proposals to the planning agents and navigation agents. The plan elaborator agent may then pass candidate mission plans received from the planning and navigation agents to the director agent. The director agent may then select a candidate mission plan for the computer infrastructure to execute. The selected mission plan will be monitored, as previously described.

The director agent may compare the candidate mission plans in order to select an optimum mission plan. This may be done by comparison to tasks to be completed during the mission, for example as defined in the mission definition component. For example, a candidate mission plan satisfying all tasks may be selected, or a candidate mission plan satisfying the highest number of tasks may be selected. Other selection criteria may be used, either in combination or as alternatives. For example, criteria may include time taken to complete the mission, distance travelled during the mission, fuel consumption during the mission and highest number of constraints met.

The present invention also resided in a method of generating and executing a mission plan of an unmanned vehicle using any of the distributed agent-based computer infrastructures described above.

The method may comprise using the operator interface component to receive information from the operator relating to the mission. The method may further comprise using the operator interface component to receive information from the operator relating to the mission. The method may further comprise using the vehicle systems interface component to interface with sensors and actuators provided on the unmanned vehicle. The method may further comprise using the autonomous mission management component to generate the mission plan from the received information including a path to be travelled, and to monitor execution of the mission plan.

Optionally, the method comprises the operator personal agent using the memory associated with the operator personal agent that has stored therein graphical user interface facilities to provide a graphical user interface with the operator. The method may comprise the graphical user interface facilities providing information to the operator and collecting information from the operator. The graphical user interface facilities may be used to provide a graphical representation of the mission plan to the operator.

The method may comprise the director agent directing the plan elaborator agent to generate the mission plan, and directing the plan executor agent to monitor execution of the mission plan. The method may further comprise the director agent communicating with the operator personal agent.

The method may comprise the plan executor agent receiving data from the vehicle systems agent that has been obtained from the sensors. The method may comprise the plan executor agent using a mission monitoring and execution function stored in the memory associated with the plan executor agent to fuse data received from the vehicle systems agent and storing the fused data in a data fusion structure. Optionally, the plan executor agent identifies conditions requiring amendment of the mission plan either directly or indirectly from the data received from the vehicle systems agent. Then, the plan elaborator agent may produce a new mission plan, for example after the plan executor agent has reported to the director agent and after the director agent directs the plan elaborator agent.

The method may comprise the plan elaborator agent instructing planning agents to elaborate mission plans and instructing navigation agents to provide the path to be travelled as part of the mission plans.

The method may comprise the planning agents and the navigation agents using the mission planning functions stored in the memory associated with the plan elaborator agent to elaborate the mission plans and to provide the path to be travelled respectively. The plan elaborator agent may instruct the path finder agent to manage the navigation agents. The method may comprise the planning agents using a mission definition stored in a mission definition component and data stored in the data fusion component to generate the mission plan.

The method may comprise the operator personal interface agent receiving information from the operator relating to the mission and providing the information to the director agent. The director agent may then cause the information to be stored in the mission definition component.

Optionally, the method comprises the plan elaborator agent providing the mission plan to the director agent, and the director agent storing the mission plan in the mission plan component. The director agent may also provide the mission plan to the operator personal agent for display to the operator.

The method may comprise the director agent directing the plan elaborator agent to provide candidate mission plans. The method may comprise the plan elaborator agent instructing the planning agents and the navigation agents to provide candidate mission plans each with a path to be travelled. The plan elaborator agent may then pass the candidate mission plans to the director agent. The method may then comprise the director agent selecting a candidate mission plan, for example using any of the criteria described above. The method may then comprise the computer infrastructure executing the selected mission plan and monitoring execution of the selected mission plan.

The method may comprise a plurality of vehicles performing a mission such that each of the plurality of vehicles communicates with an autonomous mission management component. For example, in some embodiments a vehicle systems agent is located on each of the plurality of vehicles and the vehicle systems agent communicates with the autonomous mission management component. The autonomous mission management component could be located on land, at sea, in the air, and/or in space. The autonomous mission management could also be static or moving. For example in some embodiments, the autonomous mission management component is located in one of the plurality of vehicles performing the mission. In other embodiments, the autonomous mission management component is located in a building. In yet further embodiments, the autonomous mission management component is located in a high altitude long endurance vehicle. Additionally the autonomous mission management component could be managing a single mission or a plurality of missions. For example, the autonomous mission management component could be managing an entire battlefield which consists of a number of different vehicle types and different missions could be performed in concurrence. Hence, one of the plurality of vehicles could be reassigned to another mission based upon its health, location, and overall mission capability (e.g. payload, weapons, vehicle configuration). Thus, optimizing the use of assets on the battlefield.

The method may comprise generating the path to be followed by generating a three-dimensional grid of nodes to cover a region enclosing the mission areas, and generating the flight path such that it proceeds from node to node. The method may comprise generating the three-dimensional grid of nodes to have a variable density of nodes. For example, the method may comprise varying the density of the nodes such that low-density volumes of nodes are provided around long path segments between mission areas and high-density volumes of nodes are provided around short path segments between mission areas. Optionally, the nodes may be arranged into layers, each layer having a specified altitude.

The method may comprise generating the paths to be followed by selecting, at least in part, airways predefined to extend through nodes. Thus, preferred airways maybe stored and preferentially selected when generating paths to be followed during execution of the mission plan.

The method may comprise receiving information from an operator relating to the mission including tasks to be performed and mission areas where each task is to be performed. Then descriptions of mission areas may be used that are defined as cylinders with a lateral position, vertical position and radius. The lateral position may be specified as a latitude and a longitude, and the lateral position may correspond to the lateral position occupied by the longitudinal axis of the cylinder. To define the height of the cylinder, an altitude range may be specified. The descriptions of mission areas may further comprise information describing geographical or meteorological conditions pertaining to that mission area. For example, a description of the terrain within the mission area may be provided, any restricted airspace within the mission area may be provided or warnings of any adverse weather conditions affecting the mission area may be provided.

In addition to using cylinders to define mission areas, cylinders may also be used to describe location features, for example areas to be avoided like topographical hazards and population densities. Thus, the method may comprise using descriptions of location features that are defined as cylinders with a lateral position, vertical position and radius, optionally as latitude, longitude and altitude range as described above with respect to mission areas. The description of location features may also contain further information such as an indication of a population centre (as a population total and/or a population density), the height of terrain, a description of a hazard to be avoided, or constraints to be applied to the mission plan.

The method may further comprise generating edges that connect nodes, and associating a cost with each edge. The cost may be based upon factors including distance between the connected nodes, time taken to travel between the connected nodes or fuel consumed to travel between the connected nodes. Where the descriptions of location features contained constraints, these constraints may be used to calculate the cost of an edge if that edge passes through the cylinder associated with the location feature.

Many different methods may be used to generate the path to be followed. For example, one or more Dijkstra algorithms may be employed for this purpose.

The present invention also resides in a computer programmed to implement any of the methods described above, and in an unmanned vehicle comprising such a computer. The unmanned vehicle may be a land, air or water vehicle. The present invention also resides in a computer program comprising computer program instructions that when executed cause a computer or computer infrastructure to implement any of the methods described above.
Clause 1. A distributed agent-based computer infrastructure configured to manage a vehicle performing a mission, the computer infrastructure comprising:
   an operator interface component comprising an operator personal agent configured for communicating with an operator;
   an autonomous mission management component comprising agents configured for receiving information from an operator via the operator personal agent, for generating a mission plan from the received information including a path to be travelled, and for monitoring execution of the mission plan; and
   a vehicle systems interface component comprising a vehicle systems agent that is configured for interfacing with at least one sensor provided on the vehicle.
Clause 2. The computer infrastructure of clause 1, further comprising memory associated with the operator personal agent having stored therein graphical user interface facilities configured for use by the operator personal agent to provide a graphical user interface with the operator, wherein the graphical user interface facilities are optionally configured for use by the operator personal agent to provide a graphical representation of the mission plan to the operator.
Clause 3. The computer infrastructure of clause 1, wherein the autonomous mission management component comprises a director agent, a plan elaborator agent and a plan executor agent, and wherein:
   the director agent is configured to direct the plan elaborator agent and the plan executor agent and to communicate with the operator personal agent,
   the plan elaborator agent is configured to generate the mission plan as directed by the director agent, and
   the plan executor agent is configured to monitor execution of the mission plan.
Clause 4. The computer infrastructure of clause 3, wherein the plan executor agent is configured to receive data from the vehicle systems agent that has been obtained from the sensors and, optionally, to use a mission monitoring and execution function to fuse the received data from the vehicle systems agent.
Clause 5. The computer infrastructure of clause 4, wherein the plan executor agent is configured to identify conditions requiring amendment of the mission plan either directly or indirectly from the data received from the vehicle systems agent and to cause the plan elaborator agent to produce a new mission plan in response thereto.
Clause 6. The computer infrastructure of clause 3, wherein the plan elaborator agent is configured to instruct planning agents to elaborate mission plans and to instruct navigation agents to provide the path to be travelled as part of the mission plans.
Clause 7. The computer infrastructure of clause 6, further comprising:
   memory associated with the plan elaborator agent having stored therein mission planning functions;
   and wherein:
   the planning agents and the navigation agents are configured to use the mission planning functions to elaborate the mission plans and to provide the path to be travelled respectively;
   the plan elaborator agent is configured to instruct a path finder agent to manage the navigation agents;
   the planning agents are configured to use a mission definition stored in a mission definition component and data stored in a data fusion component when generating the mission plan;
   the operator interface agent is configured to receive information from the operator relating to the mission and to provide the information to the director agent, and wherein the director agent is configured to cause the information to be stored in the mission definition component; and
   the plan elaborator agent is configured to provide the mission plan to the director agent, and the director agent is configured to cause the mission plan to be stored in a mission plan component and, optionally, to provide the mission plan to the operator personal agent for display to the operator.
Clause 8. The computer infrastructure of clause 3, wherein the director agent is configured to direct the plan elaborator agent to provide candidate mission plans, the plan elaborator agent instructs the planning agents and navigation agents to provide candidate mission plans each with a path to be travelled, the plan elaborator agent passes the candidate mission plans to the director agent, and the director agent selects a candidate mission plan, and wherein the computer infrastructure is configured to execute the selected candidate mission plan and to monitor execution of the selected candidate mission plan.
Clause 9. A method of managing an unmanned vehicle executing a mission, the method comprising:
   receiving information from an operator relating to the mission including tasks to be performed and mission areas where each task is to be performed;
   generating a mission plan from the received information including a path to be followed to traverse the mission areas;
   wherein generating the path to be followed comprises generating a three-dimensional grid of nodes to cover a region enclosing the mission areas, and generating the path such that it proceeds from node to node.
Clause 10. The method of clause 9, wherein generating the path to be travelled comprises generating a three-dimensional grid of nodes to cover a region enclosing the mission areas, and generating the flight path such that it proceeds from node to node.
Clause 11. The method of clause 10, comprising generating the three-dimensional grid of nodes to have a variable density of nodes and, optionally, varying the density of the nodes such that low-density volumes of nodes are provided around long path segments between mission areas and high-density volumes of nodes are provided around short path segments between mission areas.
Clause 12. The method of clause 9, further comprising:
   using descriptions of mission areas that are defined as cylinders with a lateral position, vertical position and radius.
Clause 13. The method of clause 12, wherein the descriptions of mission areas further comprise information describing geographical or meteorological conditions pertaining to that mission area.
Clause 14. The method of clause 12, further comprising using descriptions of location features that are defined as cylinders with a lateral position, vertical position and radius, and that contain further information regarding the location feature such as a indication of a population centre, height of terrain, or a description of a hazard to be avoided, wherein the further information optionally comprises constraints to be applied to the mission plan.
Clause 15. The method of clause 10, further comprising generating edges that connect nodes, and associating a cost with each edge based upon factors including at least one of: distance between the connected nodes, time taken to travel between the connected nodes, fuel consumed to travel between the connected nodes, and constraints contained within a description of a location feature that is defined by a cylinder through which the edge passes.
Clause 16. An agent-based system to manage a vehicle performing a mission comprising:
   an operator personal agent configured for communicating with an operator;
   a vehicle systems agent configured for interfacing with at least one sensor provided on the vehicle; and
   an autonomous mission management component comprising agents configured for receiving information from an operator via the operator personal agent, for generating a mission plan from the received information including a path to be travelled, and for monitoring execution of the mission plan.
Clause 17. The agent based system of clause 16 wherein the system manages a plurality of vehicles.
Clause 18. The agent-based system of clause 16 wherein the system manages a plurality of missions.
Clause 19. The agent-based system of clause 16 wherein generating the path to be followed comprises generating a three-dimensional grid of nodes to cover a region enclosing a mission area, and generating the path such that it proceeds from node to node.
Clause 20. The agent-based system of clause 19 wherein generating the path to be followed further comprising generating edges that connect nodes, and associating a cost with each edge based upon factors including at least one of: distance between the connected nodes, time taken to travel between the connected nodes, fuel consumed to travel between the connected nodes, and constraints contained within a description of a location feature that is defined by a cylinder through which the edge passes.

### Brief Description of the Drawings

In order that the present invention may be more readily understood, preferred embodiments will now be described, by way of example only, with reference to the accompanying drawings in which:
Figure 1 is a simplified representation of a computer infrastructure distributed between an unmanned air vehicle and a ground station;
Figure 2 is a schematic representation of a method of managing a mission of an unmanned vehicle according to an embodiment of the present invention;
Figure 3 shows the produce mission plan step of Figure 2 in greater detail;
Figure 4 shows the run mission step of Figure 2 in greater detail;
Figure 5 shows the amend mission step of Figure 2 in greater detail;
Figure 6 is a schematic representation of elements of a computer infrastructure according to an embodiment of the present invention;
Figure 7 is a simplified representation of a computer infrastructure comprising three components distributed between an unmanned air vehicle and a fixed ground station;
Figure 8 is a simplified representation of a computer infrastructure comprising three components distributed between an unmanned air vehicle, a mobile ground station and a fixed ground station;
Figure 9 corresponds to Figure 6, but shows the computer infrastructure in greater detail;
Figure 10 shows the autonomous mission management component of Figures 6 and 9 in greater detail;
Figure 11 shows an arrangement of agents used by the computer infrastructure; and
Figure 12 shows a description of the algorithm to produce a mission plan using as a starting point a data structure that contains the information gathered from different sensors.

### Detailed Description

Embodiments of the present invention will now be described in the context of managing missions for an unmanned air vehicle. As will be appreciated from the above, unmanned air vehicles are just one application of the present invention that enjoys applicability to all types of unmanned vehicles, whether they be unmanned land vehicles, unmanned air vehicles or unmanned water-borne vehicles.

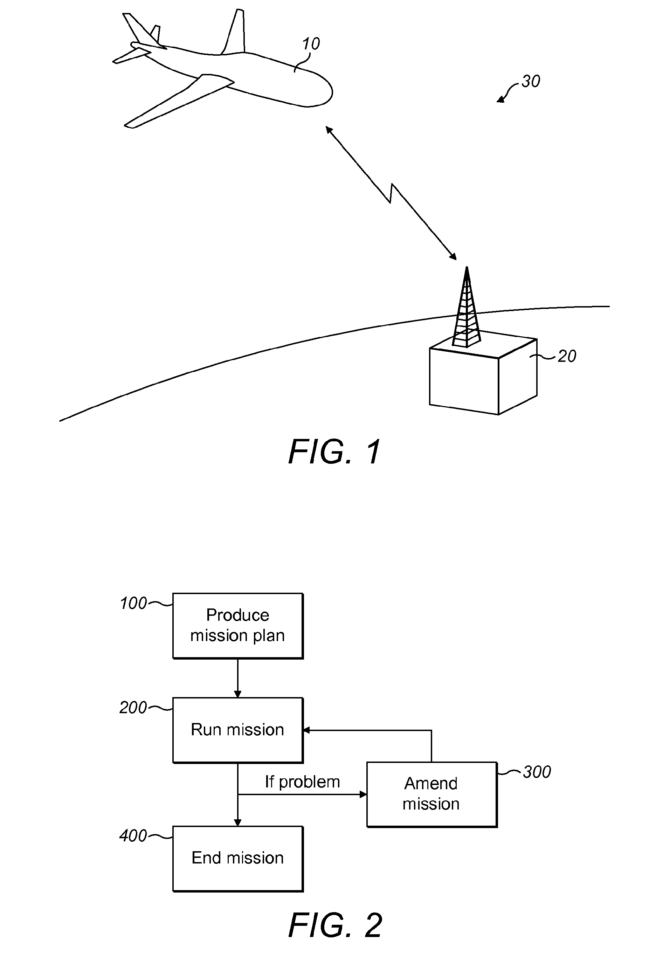

Figure 1 shows an unmanned air vehicle 10 and a ground station 20 that together provide a distributed computer infrastructure 30. The unmanned air vehicle 10 and the ground station 20 are provided with communication means that allows them to communicate with each other.

Figure 2 shows a general method of managing a mission. The method is practised using the computer infrastructure 30 of Figure 1. The computer infrastructure 30 may be a single computer or, as in this embodiment, it may be a distributed network of computers. The network may be linked in any conventional manner, e.g. using an intranet or internet. In this embodiment, the computer infrastructure is distributed. Most of the computer infrastructure is hosted within the vehicle 10, although some parts of the computer infrastructure 30 are based in a ground station 20 so as to be accessible to a ground-based operator. A communication link is provided between the vehicle-based part of the computer infrastructure 10 and the ground-based part of the computer infrastructure 20. The vehicle 10 may use additional computational resources such as telecommunications networks, if required.

In Figure 2, a mission plan is produced at 100. This comprises gathering the information needed to organise the mission, and using that information to arrive at a detailed plan for the mission. A mission definition is produced that includes all the intelligence necessary to create the mission plan, like current traffic or weather conditions, expressed as a set of constraints. As a result of analyzing this mission definition, a mission plan will be devised. This mission plan will include a flight plan for the unmanned air vehicle 10.

With the mission plan finalised at 100, the method proceeds to step 200 where the mission is run. This involves the unmanned air vehicle 10 flying the mission according to the mission plan, namely following the flight plan and carrying out tasks assigned to the unmanned air vehicle 10 at the designated points on the mission plan. While the mission is being performed at 200, monitoring is ongoing. This monitoring looks for actual or potential problems or other changes in circumstance that suggest the mission plan should be amended.

If a problem is found, or other circumstance that requires a change in the mission plan, the method proceeds to step 300 where the mission plan is amended. Step 300 is similar to step 100 where the mission plan was first produced, as will be apparent from the following description where both steps 100 and 300 are described in more detail.

Once the amended mission plan is finalised at step 300, the mission proceeds according to the amended mission plan. Hence, the method rejoins step 200 where the mission is run. Again, monitoring is ongoing such that a mission may undergo more than one instance of the mission plan being amended at step 300.

Eventually, all tasks assigned to the mission will be complete, including the safe landing of the unmanned air vehicle 10. At this point, the mission ends at 400.

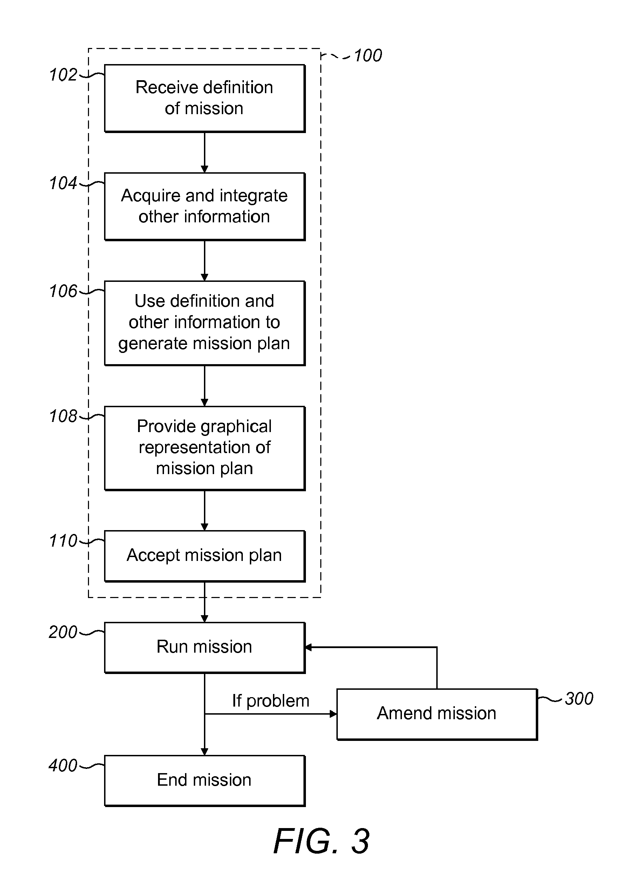

Figure 3 shows the same method as Figure 2 with the same steps of produce mission plan 100, run mission 200, amend mission plan 300 and end mission 400, but with the produce mission plan step 100 shown in greater detail. The produce mission plan step 100 is shown as a dashed box, within which five further method steps are shown.

The produce mission plan step 100 starts at 102 where a definition of the mission is received. This mission definition will set out the tasks to be performed and any objectives to be achieved during the mission. For example, the mission definition may include the start location, mission areas to be visited, order in which the mission areas must be visited, and constraints to be applied from mission area to mission area. In this embodiment, each mission area is a volume represented by a cylinder located at a latitude and longitude, with a concrete altitude range and radius. In a mission area, the vehicle 10 should arrive within a time frame and spend a pre-determined amount of time in the mission area. This permits surveillance missions where photographs can be taken (only spending some time is required), and missions where supplies are deployed (loss of mass to the unmanned air vehicle 10) or some objects are taken (mass gained by the unmanned air vehicle 10). Additional mission constraints include: waypoints to include in the flight path from mission area to mission area, maximum population density of populations found from one mission area to another over which the unmanned air vehicle 10 may fly, and whether the unmanned air vehicle 10 is allowed to leave the radio range of the operator.

For a mission plan to be produced, other information is usually required and this may be acquired at step 104. Using data fusion, weather conditions and terrain data (physical obstacles, possible vehicles, and populations) are included in a data structure. In this embodiment, all of these pieces of information are gathered and associated with cylinders specified by a latitude, longitude, altitude range and radius. This additional information is either provided to the computer infrastructure, or is automatically retrieved by the computer infrastructure by means of delegated software agents.

At step 106, the definition of the mission provided at step 102 and the other information obtained at step 104 are used by the computer infrastructure 30 to generate a mission plan. In this example, it is the part of the computer infrastructure 30 provided in the unmanned air vehicle 10 that generates the mission plan. The computer infrastructure 30 may produce mission plans in many different ways. Furthermore, some methods may provide more than a single mission plan solution. In this situation, the computer infrastructure 30 may characterise each mission plan produced to choose the best one.

The resulting mission plan provides a blueprint of how the mission is to be performed. It will specify the flight plan to be followed during the mission. It may also specify the speed of the unmanned air vehicle 10 during the mission and/or the times or arrival of the unmanned air vehicle 10 at points along the flight path to be followed. As is well known in the art, the detail provided in the mission plan may vary. For example the mission plan may provide detailed instructions for all parts of the mission plan, or it may provide a framework such as times of arrival at waypoints while leaving the intelligence provided on the unmanned air vehicle 10 to determine autonomously how to achieve the corresponding flight path.

Step 106 also sees the unmanned air vehicle based part 10 of the computer infrastructure 30 provide the description of the mission plan to the ground based part 20 of the computer infrastructure 30.

Once the mission plan has been generated at step 106, the method continues to step 108 where the ground based part 20 of the computer infrastructure 30 uses the mission plan provided by the vehicle based part 10 of the computer infrastructure 30 to represent graphically the mission plan. A graphical representation of the mission plan is generated for viewing by an operator at the ground station 20 who may then check to see that the mission plan is satisfactory. Options to accept, reject or amend the mission plan are provided. Step 108 may be omitted if desired.

The mission plan is accepted at step 110, for example by an operator indicating approval during step 108 when a graphical representation of the mission plan is viewed. Once the mission plan is accepted at step 110, an acknowledgment is sent to the vehicle based part 10 of the computer infrastructure 30.

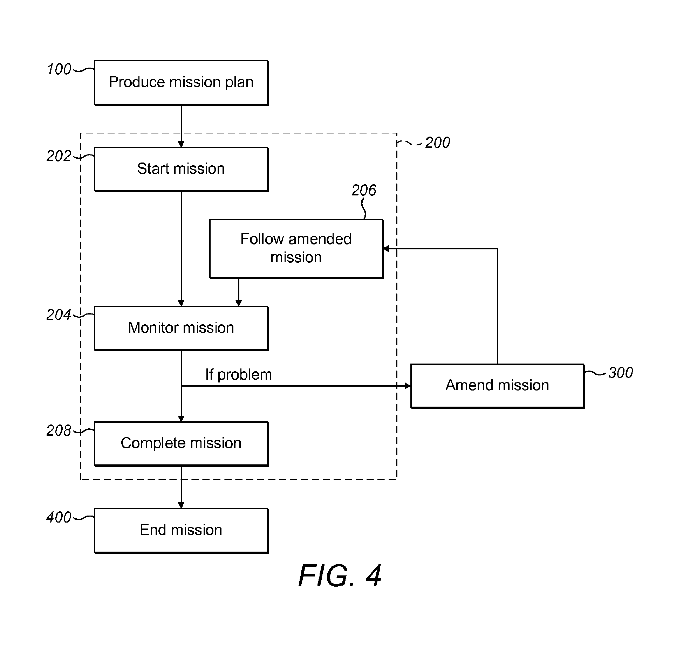

Figure 4 shows the same method of Figure 2 with the same steps of produce mission plan 100, run mission 200, amend mission plan 300 and end mission 400, and with the run mission step 200 shown in greater detail. The run mission step 200 is shown as a dashed box, within which four further method steps are shown.

At step 202, the mission is started. For example, the unmanned air vehicle 10 is started and proceeds to launch or take off. At the same time that the mission starts at step 202, monitoring also commences at step 204. Mission monitoring 204 consists in observing the deviation of the current flight path with respect to the mission plan, and may comprise detecting any of the following kind of events: vehicle malfunction, environment change, fuel low, and crash warning. All of these events are detected using information provided by sensors provided on the vehicle 10. For example, a mission may need to be amended if the unmanned air vehicle 10 develops a fault. A serious fault may require the unmanned air vehicle 10 to land immediately or to return to base as soon as possible, whereas other faults may need a change in the mission plan for example to account for reduced speed leading to delays in arrival at waypoints.

The environment is monitored for factors that may affect the unmanned air vehicle's ability to perform the mission. For example, changes in meteorological conditions may be monitored. If the unmanned air vehicle 10 is operating over or near hostile territory, the presence of enemy units may be monitored as a change in the environment. In addition, the presence of air traffic near the unmanned air vehicle 10 is monitored such that avoiding action may be taken if necessary.

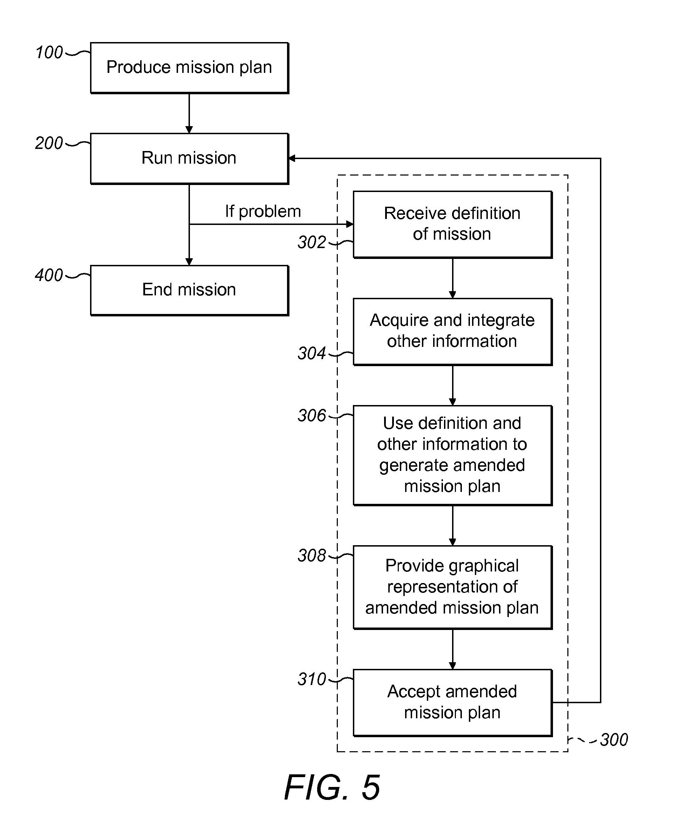

Requests for new tasks and/or objectives are also monitored. For example, a request for surveillance at a location on or close to the flight plan of an active unmanned air vehicle 10 may be assigned to that unmanned air vehicle 10. The mission plan may then be amended to include the new surveillance task and a new mission plan produced. All these cases require a mission amendment in step 300, as explained in the following paragraphs and as shown in Figure 5.

Once an amended flight plan has been produced, the method returns to the run mission step 200, namely by proceeding to step 206 where the mission continues but switches to follow the amended mission plan. The mission then continues with the monitoring step 204.

Eventually, the mission completes at step 208, and the method exits the run mission step 200 to terminate at the mission end step 400.

Figure 5 shows the same method of Figure 2 with the same steps of produce mission plan 100, run mission 200, amend mission plan 300 and end mission 400, but with the amend mission step 300 shown in greater detail. The amend mission step is shown as a dashed box 300, within which five further method steps are shown.

The amend mission step 300 has many similarities to the produce mission plan 100. Hence, only a brief description is provided here to avoid repetition. The description of Figure 3 above can be referred to for further details.

The amend mission step 300 starts at step 302 where the definition of the mission is retrieved, including any changes such as new tasks. The other information that may be required to produce the amended mission plan may be retrieved at step 304. At step 306, the definition of the mission and the other information acquired are used by the vehicle based part 20 of the computer infrastructure 30 to generate an amended mission plan. At step 308, the vehicle-based part 10 of the computer infrastructure 30 passes the amended mission plan to the ground-based part 20 of the computer infrastructure 30 that simulates the amended mission plan and generates a graphical representation of the amended mission for viewing by an operator at the ground station 20. The operator may then check to see that the amended mission plan is satisfactory. Step 308 may be omitted if desired. Once the mission plan is accepted at step 310, an acknowledgement is transferred to the vehicle-based part 10 of the computer infrastructure 30, after which the unmanned air vehicle 10 may switch from the previous mission plan (which may be the original mission plan or an earlier amended mission plan) to following the newly amended mission plan.

As will be appreciated, the amend mission step 300 is carried out while the unmanned air vehicle 10 continues to operate. Thus, the unmanned air vehicle 10 will continue to fly. The unmanned air vehicle 10 may continue with its current flight plan while an amended flight plan is derived. Alternatively, a revised flight plan may be followed. For example, where the unmanned air vehicle 10 is a helicopter, it may be instructed simply to hover at its present location. For a winged aircraft, the unmanned air vehicle 10 may be instructed to maintain a holding pattern that sees the aircraft 10 circulate around its current location.

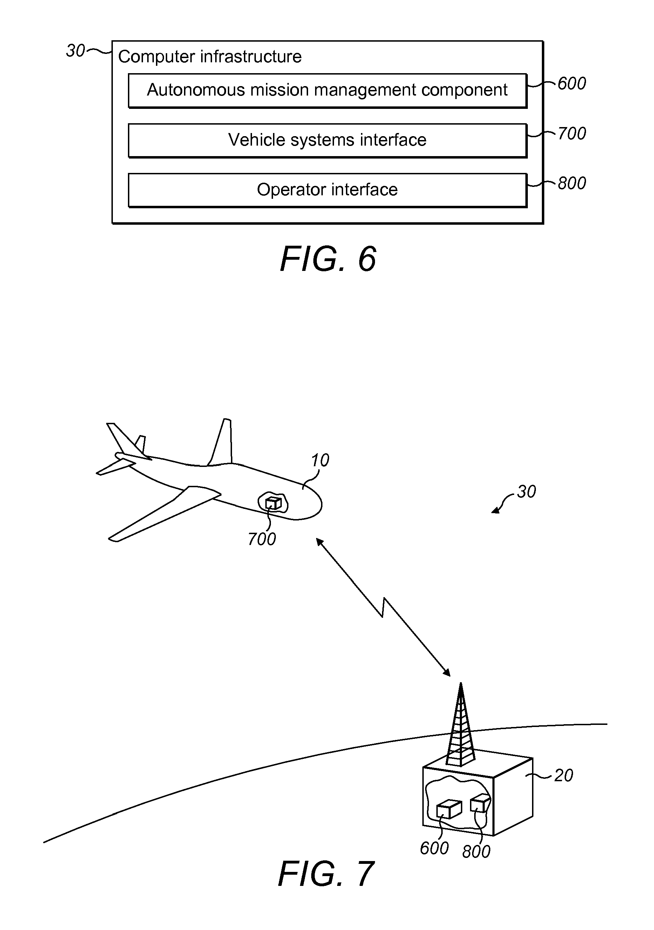

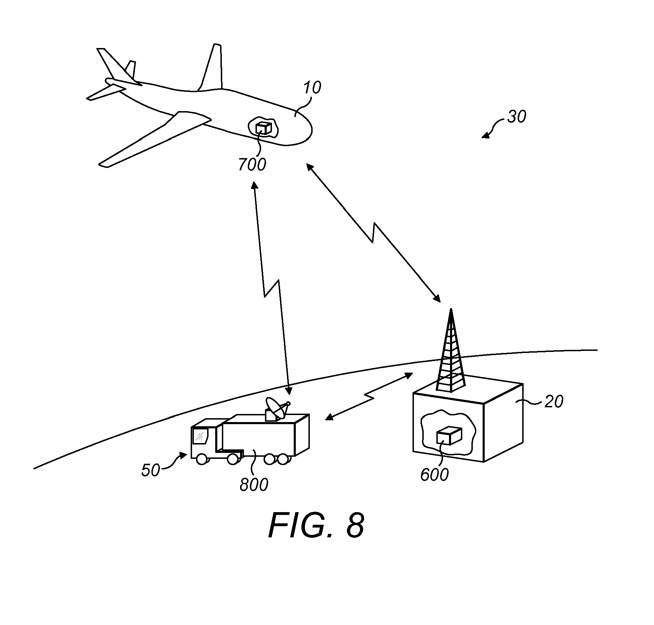

The computer infrastructure 30 has been introduced in the description above. Figure 6 shows an example of a computer infrastructure 30, and this will be described below with further reference to Figures 7 and 8.

As described above, the computer infrastructure 30 may be divided between a ground-based part 20 and a vehicle-based part 10. The following description treats the computer infrastructure 30 as a whole, and is not specific as to whether the computer infrastructure 30 is ground based, vehicle based or divided. It will be straightforward to those skilled in the art to implement the computer infrastructure 30 in a divided manner, with part being ground based and part being vehicle based. The division may see elements of the computer infrastructure 30 duplicated across the ground and vehicle based parts. In addition, Figures 7 and 8 show two exemplary arrangements of the computer infrastructure 30.

The computer infrastructure 30 has three core components. These components are the autonomous mission management component 600, the vehicle systems interface component 700 and the operator interface component 800.

The operator interface component 800 represents the part of the computer infrastructure 30 that is used by the human operator. This operator interface component 800 provides the graphical user interface to the operator, and so is the part of the computer infrastructure 30 that presents information to the operator and that collects data inputs from the operator.

The vehicle systems interface component 700 is the part of the computer infrastructure 30 that communicates with the systems of the vehicle 10. This includes receiving data from vehicle systems such as sensors (e.g. a radar system in unmanned air vehicle) for use by the computer infrastructure 30, and providing instructions to vehicle systems such as actuators (e.g. flight control surfaces) or to other software systems (e.g. a flight management computer).

The autonomous mission management component 600 is responsible for the mission plan creation, execution, and monitoring. In this embodiment, it is self-contained and does not require external aids, except the acknowledgement provided by the operator when a flight plan (original or amended) is accepted. It receives data from the operator interface component 800 and the vehicle systems interface component 700, and uses this data to produce a mission plan and then to carry out the mission plan. The autonomous mission management component 600 also provides signals to the operator interface component 800 and the vehicle systems interface component 700, such as a description of a flight plan to be rendered by the operator interface component 800 as a display to the operator.

One possible distribution of computer infrastructure 30 is shown in Figure 7. In this embodiment, the operator is ground based and located in a building 20 that serves as the ground station 20. The operator interface component 800 is located at the building 20, as is the autonomous mission management component 600. As they are co-located, the operator interface component 800 and the autonomous mission management component 600 may be linked through a local area network. The vehicle systems interface component 700 is located on the unmanned air vehicle 10. The operator interface component 800 and the autonomous mission management component 600 share a common communication link to the vehicle systems interface component 700 of the unmanned air vehicle 10.

An alternative distribution of computer infrastructure 30 is shown in Figure 8. In this embodiment, the operator is ground based, but mobile in that the operator resides in a lorry 50 having a unit that accommodates the operator interface component 800. The autonomous mission management component 600 has heavy computing needs, and so is conveniently provided at a fixed location, that is at building 20. The lorry 50 is provided with communication means that are used by the operator interface component 800 to communicate with both the autonomous mission management component 600 in the building 20 and the vehicle systems interface component 700 of the unmanned air vehicle 10.

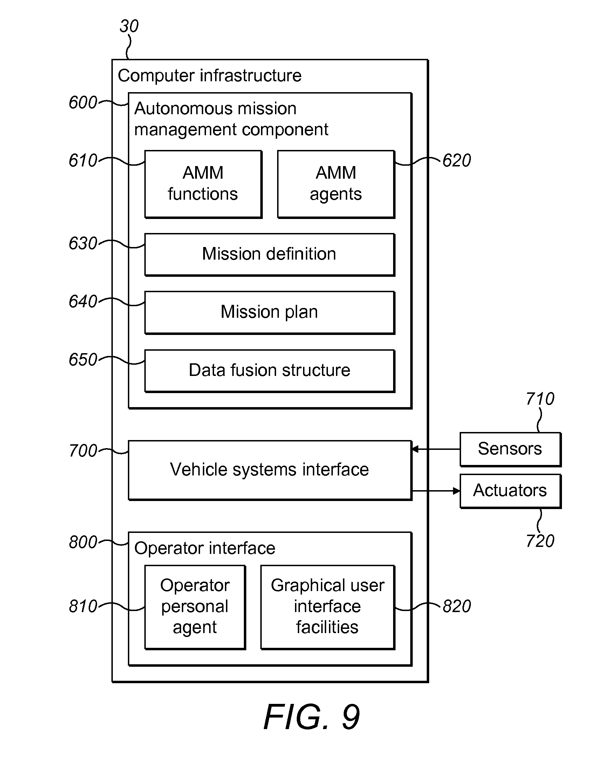

Figure 9 introduces a more detailed description of the computer infrastructure 30.

The operator interface component 800 contains the elements to be found on the operator side, namely an operator personal agent 810 and graphical user interface facilities 820. The operator personal agent 810 is responsible for acting on behalf the operator to communicate with other agents contained within the autonomous mission management component 600. Graphical user interface facilities 820 provide the functionality to present information to the operator on a display, and to receive information from the operator (e.g. via common data input devices such as touch screens, keyboards, computer pointing devices, voice recognition, etc.).

The vehicle systems interface component 700 comprises sensors 710 and actuators 720. Sensors 710 may represent any sensor the vehicle 10 carries or just a subset of the sensors the vehicle 10 carries. These sensors include those capable of identifying the current location of the unmanned air vehicle 10 and relevant geographic information of the surrounding area. Actuators 720 include all or some of the elements in the unmanned air vehicle 10 that permit control of the vehicle 10, such as flight control surfaces, throttles, etc. The actuators 720 may also include autopilot facilities that in turn control other actuators such as flight control surfaces, engine throttles, etc. In this way, the computer infrastructure 30 may manage the unmanned air vehicle 10 so as to establish a target latitude, longitude and altitude. The autopilot may be used to fly the aircraft 10 from one specified waypoint to the next specified waypoint.

The autonomous mission management component 600 comprises autonomous mission management functions 610, autonomous mission management agents 620, mission definition component 630, mission plan component 640, and a data fusion structure 650.

The autonomous mission management functions 610 are responsible for basic services for realising the autonomous mission management functionality. That is, the autonomous mission management functions component 610 comprises memory storing a library of mission planning algorithms and a suite of mission monitoring and execution software facilities.

Autonomous mission management agents 620 are provided to perform control functions by calling and using the functions provided by the autonomous mission management functions component 610.

The data fusion structure 650 stores information that has been collected from the sensors 710 and fused to provide an homogeneous representation of the vehicle's environment.

The mission definition component 630 contains the current mission parameters as agreed with the human operator. The mission plan component 640 contains the actual sequence of actions to be executed by the vehicle that is calculated by the computer infrastructure 30 from the mission definition. It is the result of applying a mission planning algorithm, provided by the autonomous mission management functions 610, over the mission definition stored by the mission definition component 630 and sensor data provided by the sensor data fusion structure 650.

Figure 7 shows in greater detail the elements of the autonomous mission management component 600.

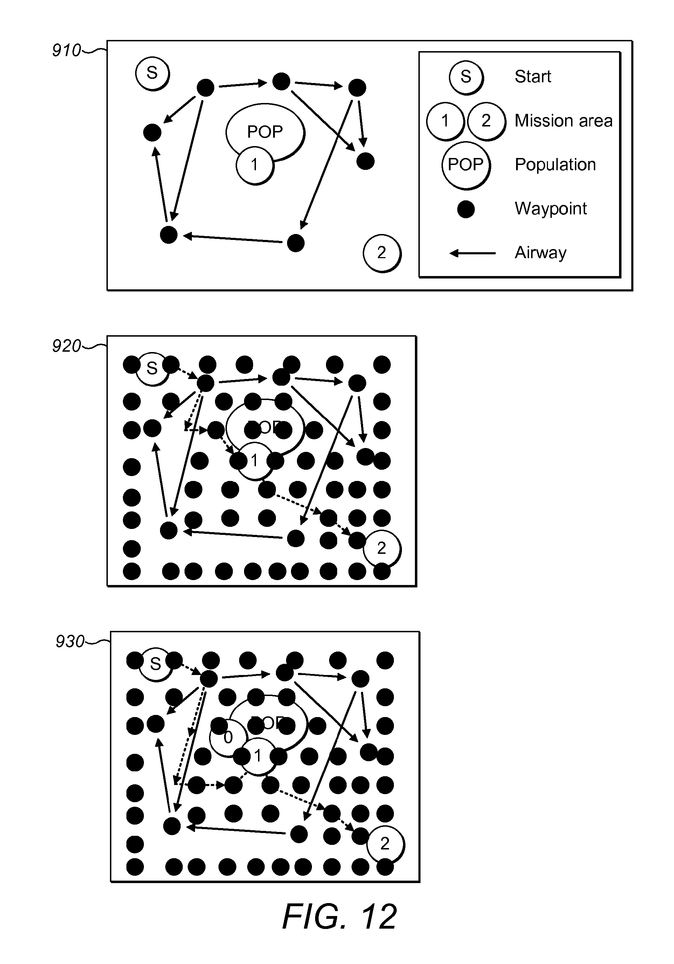

Autonomous mission management functions 610 generally comprise mission planning algorithms 611 that are stored in a memory, along with the mission monitoring and execution facilities 612. The mission planning algorithms 611 operate to indicate possible ways in which a mission plan can be obtained starting from the mission definition provided by the mission definition component 630, using a grid based approach to be described with reference to Figure 12. The mission monitoring and execution facilities 612 serve to connect the high level control functions to the vehicle systems interface component 700. The mission monitoring and execution facilities 612 connect with the vehicle sensors 710 and actuators 720 to perform the commands as requested by the mission plan stored in the mission plan component 640. Also, the mission monitoring and execution facilities 612 perform the data fusion necessary to create and maintain the data fusion structure 650.

The autonomous mission management agents 620 comprise a director agent 621, a plan elaborator agent 622, a plan executor agent 623, and a path finder agent 624.

The director agent 621 plays the overall director role and is responsible for coordinating the work of the other agents. The director agent 621 decides when a mission plan has to be produced, amended or aborted.

The plan elaborator 622 is responsible for creating new mission plans, as instigated by the director agent 621, by coordinating different agents specialized in the production of mission plans. The plan elaborator agent 622 issues a call for proposals to agents knowing how to produce mission plans that bring together tasks to be executed, and instructs the path finder agent 624 to provide flight paths for the mission plans.

The path finder agent 624 plays the path finder role under the supervision of the plan elaborator agent 622. This role describes the capabilities to be expected from an agent that knows how to produce a flight path for a mission plan starting from the mission definition.

The plan executor 623 executes a mission plan, obtaining the set of commands to be issued to the vehicle systems interface 700 in order that the vehicle 10 follows the required flight path associated with the mission plan.

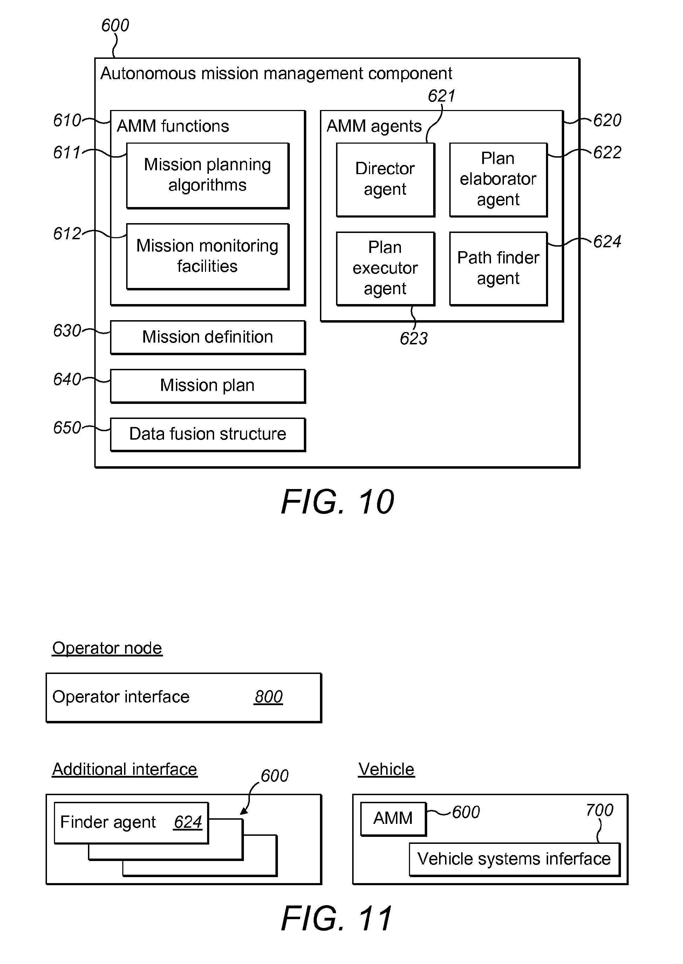

Since agents are inherently distributed, the deployment of this computing infrastructure 30 knows many variants. One possibility is represented in Figure 11. In this figure, the agents on the operator side and the vehicle side are represented. Path finder agents 624 are the most expensive to handle and require stronger computing capabilities. Therefore, and transparently for the computer infrastructure 30, path finder agents 624 are located on the ground side or the operator side rather than being provided on the vehicle side. Communication between agents would remain the same, since this is what enables the agent technology. Though communication is more expensive with this arrangement, the response time of the mission plan is quicker. Also, this arrangement allows rapid amendment of a mission plan during mission execution.

Agents in the system are described using a notation extracted from the INGENIAS methodology, an agent oriented software engineering methodology, see for example (http://ingenias.sf.net, Juan Pavón, Jorge J. Gómez-Sanz: Agent Oriented Software Engineering with INGENIAS. CEEMAS 2003: 394-403 ). According to this methodology, an agent plays roles, has goals, and is responsible for tasks. An agent intends to achieve its goals. A goal is achieved only when some pieces of information exist. These pieces of information can come as a result of task execution or an interaction with other agents. Tasks are enabled when the inputs they require are present.

Tasks are executed when the agent decides so. This requires the agent to be chosen and has as a result the production of additional information that can enable other tasks to be performed, either by the current agent or by other agents. Task selection criteria are driven by the goals: only those tasks that permit to achieve current goals are selected. Tasks can be associated directly to an agent or to roles. An agent playing a role is thought to become responsible for the tasks associated with the role. Also, an agent can engage in conversations with one or more other agents. During a conversation, information is exchanged automatically among agents. This information enables the execution of new tasks, permitting the agents to achieve their goals.

There are five main interactions in the system: a build plan interaction which concerns the construction of a mission plan; an agree and execute a plan interaction, which represents an operator supplying a mission definition and agreeing on a mission plan; a mission being cancelled by an operator interaction, that addresses an operator aborting a plan; a mission being cancelled due to an emergency interaction, that addresses situations where an emergency means that the mission cannot be continued; and an emergency plan generation interaction, that represents an amendment of a mission plan during a mission. These interactions are now described.

### Build plan interaction

In this interaction, the plan elaborator agent 622 uses mission planning algorithms to elaborate a mission plan that brings together tasks to be performed and then instructs the path finder agent 624 to select navigation algorithms from the mission planning algorithms 611 that will participate in determining a flight path to service the tasks. The selection of these navigation algorithms is represented by the path finder functionality role provided by the path finder agent 624.

Plan elaboration starts with the director agent 621 instructing the plan elaborator agent 622 to start the elaboration process. This elaboration process involves one or many agents with the capability of generating mission plans and of generating flight paths. These agents are located by the plan elaborator agent 622 and the path finder agent 624 using a yellow pages service, which is standard in current agent platforms and so will not be described further. The yellow pages service identifies the agents that can provide the required service, independently of their location. That way, agents being located on the operator side can be involved in the mission plan and flight path computation. Each agent playing the mission planning and path finder functionality role will, in combination, propose a complete mission plan with a flight path before a timeout is triggered by the plan elaborator agent 622. Of the mission plans proposed, the best mission plan is determined by plan elaborator agent 622 and will be the mission plan selected for execution. To enable selection of the best mission plan, the mission constraints stored in the mission definition component 630 are used. The goodness of a mission plan is determined according to how many mission constraints the mission plan satisfies.

### Agree and execute a plan

This interaction starts with the operator personal agent 810 passing the director agent 621 a mission definition 630 so that the director agent 621 can proceed to request a plan elaboration. Since the plan elaboration takes time, if the unmanned air vehicle 10 is already airborne, the director agent 621 demands the plan executor agent 623 to arrange a holding pattern behaviour for the vehicle 10, and then the plan elaboration request is issued by the director agent 621. A holding pattern may make the vehicle 10 fly in circles, but other behaviours are possible. Plan elaboration would happen as described by the find path interaction described immediately above. The resulting mission plan is supplied to the operator personal agent 810 for display to the operator and the subsequent acknowledgement of the human operator. Further functionality may be provided for the operator to decline the mission plan or to suggest amendments to the mission plan. Once a mission plan has been acknowledged, the director agent 621 passes the mission plan 640 to the plan executor agent 623. The mission plan 640 is a description of a sequence of orders to follow in order to arrive to the end of the mission. When the plan executor agent 623 finishes the mission execution, the plan executor agent 623 sends a message to the director agent 621. The director agent 621 then notifies the operator personal agent 810.

### Mission cancelled by an operator

This interaction is initiated by the operator requesting that the mission is aborted. Aborting a mission execution implies cancelling any ongoing conversation between agents. At any moment, it is foreseen that three actors carry on conversations: an operator personal agent 810, a director agent 621, and a plan executor agent 623. The abort order is submitted by the operator personal agent 810 to the director agent 621. The director agent 621 passes the abort order to the plan executor agent 623. The plan executor agent 623 then stops the current mission plan 640 and directs the unmanned air vehicle 10 to enter a holding pattern that is appropriate for the emergency.

### Mission cancelled due to an emergency

This interaction is similar to the previous interaction, with the abort order being generated internally within the computer infrastructure 30 this time. The director agent 621 submits the abort order to the plan executor agent 623, and then the plan executor agent 623 directs the unmanned air vehicle 10 to enter a holding pattern that is appropriate for the emergency.

### Emergency plan generation

This interaction is initiated by the director agent 621, and serves to deal with an emergency that can be overcome by amending the current mission plan rather than aborting the mission plan altogether. This interaction assumes that a new mission plan can be elaborated to deal with the emergency using the build plan interaction. A reason to generate an amended mission plan would be, for example, that a sensor 710 indicates the unmanned air vehicle to be too close to terrain like a mountain. Such a situation would trigger an emergency plan elaboration interaction that will call a new build plan interaction. When the amended mission plan is available from the build plan interaction, the director agent 621 would transmit the amended mission plan to the operator personal agent 810. The operator would acknowledge the amended mission plan. Then, the director agent 621 would retransmit the amended mission plan to the plan executor agent 623 so that it is executed to completion. When the mission plan execution finishes, the director agent 621 is notified by the plan executor agent 623 and the director agent 621 notifies the operator through operator personal agent 810.

The orchestration of the interactions is the responsibility of the tasks. These interactions are launched by concrete tasks which respond to events triggered by data received by the vehicle systems interface 700 from the sensors 710. For instance, the unmanned air vehicle 10 is assumed to detect the proximity of physical objects and create a collision avoidance warning event. This warning enables and triggers the "deal with a collision avoidance task". A collision avoidance warning could be issued if and only if there was a new obstacle in the environment not included in current mission plan. This situation would imply that the current mission plan is inaccurate. Hence, the computer infrastructure 30 cancels any ongoing mission plan execution and gathers the information needed to produce a new mission plan.

To prevent further collision avoidance warnings while the current warning is being solved, the unmanned air vehicle sensors 710 are disabled for 15 seconds. Either a new mission plan is generated with an emergency plan generation interaction, or the current mission plan is aborted with the a mission cancelled due to an emergency interaction. The most appropriate interaction may be determined by the computer infrastructure 30 using the information gathered.

When an emergency plan generation interaction completes, an amended mission plan is available but it requires acknowledgement by the operator. The existence of the amended mission plan and the collision avoidance warning being processed makes the director agent 621 launch an "evaluating new plan for collision avoidance" task. Launching this task causes, in turn, the launching of a new "emergency plan generation" interaction to confirm the amended mission plan and then to proceed to execute the amended mission plan.

Similarly to the "deal with a collision avoidance" task, there are other tasks that are capable of dealing with malfunctions. For example, other tasks could include "deal with fuel low" tasks in situations of fuel exhaustion, "deal with malfunction" tasks in situations where a sensor 710 or actuator 720 is found to be faulty, and "deal with environment change" tasks in situations where sensor data suggests a change in the environment around the unmanned air vehicle 10.

Sensor data fusion comprises the plan executor agent 623 receiving data from sensors 710 via the vehicle systems interface component 700, and the plan executor agent 623 directing the mission monitoring and execution facilities 612 to operate on the data to produce an alternative representation that unifies the data. The unified representation is stored in the data fusion structure 650 and replaces the previous representation stored therein.

In this embodiment, the unified representation is associated with one of a collection of cylinders that represent regions to be flown through as part of a mission plan. Each cylinder's location is specified according to a latitude and a longitude, a radius and an altitude range. Each cylinder is considered solid to all effects, and it may represent a dangerous zone (because of the weather or enemies in the territory), a densely populated area, or any other circumstance that the vehicle should avoid.

The mission definition 630 is constructed using a mission definition language. It provides a description of the mission plan in a language that the mission planning algorithms 611 understand. The computer infrastructure 30 takes this information as an XML file encapsulating all the information.

The mission description files comprise a sequence of mission areas. Each mission area is characterized by several elements: an identification code, a latitude, a longitude, an altitude, radius, the mass the unmanned air vehicle 10 is to lose or gain in the area (e.g. by deploying a payload), the time frame in which the vehicle 10 is to arrive at the area, and the time to spend in the area. For each pair of consecutive mission areas, there can be restrictions such as waypoints to visit, population centres to avoid, or the need to fly only within radio range. Waypoints are mainly characterized by their latitude, longitude, and radius. The restriction of avoiding population centres may correspond to a restriction to avoid flying over areas with a population density greater than a specified limit. The restriction for staying within radio range means that the vehicle 10 must be reachable by its operator between the mission areas specified by that constraint.

Data fusion structure 650 is used to provide data that augments the information contained in the mission definition 630 to provide the mission plan 640. Two algorithms from the mission planning algorithms 611 are used by the path finder agent 624 to provide a flight path for the mission plan. The first algorithm is concerned with traversing from one mission area to another mission area in a straight line, despite whatever obstacles may be located between the mission areas. The second algorithm obtains a flight plan no matter the situation, and is a grid-based navigation algorithm.

The grid-based navigation algorithm uses a three dimensional grid, and may be based on the well-known Dijkstra algorithm. Generating flight plans for a mission may require a repetitive application of the Dijkstra algorithm. As an example, if the mission has four mission areas, the goal for the Dijkstra algorithm will be to achieve minimal costs for going from the initial point to the first mission area, from the first mission area to the second mission area, from the second mission area to the third mission area, and from the third mission area to the fourth mission area. So, there may be four invocations of the Dijkstra algorithm, one for each mission area except the last. The unmanned air vehicle 10 must travel from mission area to mission area within a certain time frame, as specified by the mission definition 630. Knowing the distance between the current position and the destination according to the mission plan, and computing the speed to be kept in order to arrive on time is straightforward.

Figure 12 illustrates an example initial problem that may be addressed by the Dijkstra algorithm.

The scenario shown at 910 introduces a region in which a mission will operate, the location where the unmanned air vehicle 10 will start a mission, the mission areas to be visited by the unmanned air vehicle 10, and some current airways available for traversing the region.

The mission plan is elaborated by the Dijkstra algorithm deploying a network of nodes, perhaps not homogenously distributed, that cover the region, as shown at 920. The Dijkstra algorithm arranges the nodes into layers, each layer representing a specified altitude. Nodes are interconnected to form a three dimensional graph. The density of nodes is important, since it determines the computation cost. The Dijkstra algorithm includes in the network of nodes those airways traversing the region, as indicated at 920. This way, the mission may use them without altering in any way the original Dijsktra algorithm. The edges linking nodes are labelled with a cost. This cost is calculated from mission constraints and vehicle parameters as follows.

### Fuel consumption

Knowing the distance to travel and the speed to hold, the expected fuel consumption between two airways may be determined in advance.

### Population area constraint

A population's tolerance at having unmanned air vehicles 10 flying over it is quantified. The lower the tolerance, and hence the higher the annoyance at the disturbance caused by the vehicle 10, the higher the cost associated to an airway passing over that population.

### Emission range areas

If the unmanned air vehicle 10 must be within range of a radio transmitter, then waypoints and airways outside the radio range are assigned an infinite cost.

### Forbidden areas and obstacles

If a waypoint on an airway is to be avoided, the airway is assigned an infinite cost. If all airways passing through or reaching a waypoint have an infinite cost, the unmanned air vehicle 10 will not fly to this waypoint.

### Forced flying over preferred waypoints

The operator may add priority to certain waypoints by associating negative costs to airways passing through or reaching those waypoints. This causes the Dijkstra algorithm to select preferentially these low cost airways. The lower the cost, the greater chance the Dijkstra algorithm will select the associated airway.

With these constraints, it may not be possible for the Dijkstra algorithm to identify a viable flight path to service the mission plan. These situations would be recognized because the cost of achieving a node becomes infinite. To overcome such situations, either the operator may be prompted to simplify the mission or the director agent 321 may choose another algorithm. For example, an alternative mission planning algorithm 611 may be chosen that returns a basic mission plan consisting in going straight from one mission area to the next mission area.

In an already existing mission flight plan, like in 920, the flight plan goes through different nodes in the artificial network devised for the algorithm. Some parts of the flight plan require traversing certain edges in the network for successfully visiting the mission areas 1 and 2 of Figure 12. It may turn out that new obstacles are identified or that the operator allocates a new obstacle using the display because some last minute intelligence is received. An obstacle is shown in 930 as a circle with a letter "O". The change in the virtual representation of the mission flight plan triggers a re-run of the planning algorithm returning a different flight plan that takes into account the changes. As a result, the new plan accounts for the obstacle while preserving the constraints associated to the flight plan.

The person skilled in the art will appreciate that variations may be made to the above described embodiments without departing from the scope of the invention defined by the appended claims.

## Claims

1. A distributed agent-based computer infrastructure configured to manage a mission of an unmanned vehicle that includes generating a mission plan and executing the mission plan, the computer infrastructure comprising:
an operator interface component wherein the operator interface component is located remote from the unmanned vehicle and comprises an operator personal agent configured for communicating with an operator;
an autonomous mission management component wherein at least part and, optionally, all of the autonomous mission management component is located remote from the unmanned vehicle and the autonomous mission management component comprises agents configured for receiving information from an operator via the operator personal agent, for generating a mission plan from the received information including a path to be travelled, and for monitoring execution of the mission plan; and
a vehicle systems interface component wherein the vehicles systems interface component is located with the unmanned vehicle and comprises a vehicle systems agent that is configured for interfacing with sensors provided on the unmanned vehicle.

2. The computer infrastructure of claim 1, further comprising memory associated with the operator personal agent having stored therein graphical user interface facilities configured for use by the operator personal agent to provide a graphical user interface with the operator, wherein the graphical user interface facilities are optionally configured for use by the operator personal agent to provide a graphical representation of the mission plan to the operator.

3. The computer infrastructure of any preceding claim, wherein the autonomous mission management component comprises a director agent, a plan elaborator agent and a plan executor agent, and wherein:
the director agent is configured to direct the plan elaborator agent and the plan executor agent and to communicate with the operator personal agent,
the plan elaborator agent is configured to generate the mission plan as directed by the director agent, and
the plan executor agent is configured to monitor execution of the mission plan.

4. The computer infrastructure of claim 3, wherein the plan executor agent is configured to receive data from the vehicle systems agent that has been obtained from the sensors and, optionally, to use a mission monitoring and execution function to fuse the received data from the vehicle systems agent.

5. The computer infrastructure of claim 4, wherein the plan executor agent is configured to identify conditions requiring amendment of the mission plan either directly or indirectly from the data received from the vehicle systems agent and to cause the plan elaborator agent to produce a new mission plan in response thereto.

6. The computer infrastructure of claim 3 or claim 4, wherein the plan elaborator agent is configured to instruct planning agents to elaborate mission plans and to instruct navigation agents to provide the path to be travelled as part of the mission plans.

7. The computer infrastructure of claim 6, further comprising:
memory associated with the plan elaborator agent having stored therein mission planning functions;
and wherein:
the planning agents and the navigation agents are configured to use the mission planning functions to elaborate the mission plans and to provide the path to be travelled respectively;
the plan elaborator agent is configured to instruct a path finder agent to manage the navigation agents;
the planning agents are configured to use a mission definition stored in a mission definition component and data stored in a data fusion component when generating the mission plan;
the operator interface agent is configured to receive information from the operator relating to the mission and to provide the information to the director agent, and wherein the director agent is configured to cause the information to be stored in the mission definition component; and
the plan elaborator agent is configured to provide the mission plan to the director agent, and the director agent is configured to cause the mission plan to be stored in a mission plan component and, optionally, to provide the mission plan to the operator personal agent for display to the operator.

8. The computer infrastructure of any of claims 3 to 7, wherein the director agent is configured to direct the plan elaborator agent to provide candidate mission plans, the plan elaborator agent instructs the planning agents and navigation agents to provide candidate mission plans each with a path to be travelled, the plan elaborator agent passes the candidate mission plans to the director agent, and the director agent selects a candidate mission plan, and wherein the computer infrastructure is configured to execute the selected candidate mission plan and to monitor execution of the selected candidate mission plan.

9. A method of generating and executing a mission plan of an unmanned vehicle using the distributed agent-based computer infrastructure of any preceding claim, the method comprising:
using the operator interface component to receive information from the operator relating to the mission, including tasks to be performed and mission areas where each task is to be performed;
using the vehicle systems interface component to interface with sensors and actuators provided on the unmanned vehicle; and
using the autonomous mission management component to generate the mission plan from the received information including a path to be travelled, and to monitor execution of the mission plan.

10. The method of claim 9, wherein generating the path to be travelled comprises generating a three-dimensional grid of nodes to cover a region enclosing the mission areas, and generating the path such that it proceeds from node to node.

11. The method of claim 10, comprising generating the three-dimensional grid of nodes to have a variable density of nodes and, optionally, varying the density of the nodes such that low-density volumes of nodes are provided around long path segments between mission areas and high-density volumes of nodes are provided around short path segments between mission areas.

12. The method of any of claims 9 to 11, further comprising:
using descriptions of mission areas that are defined as cylinders with a lateral position, vertical position and radius.

13. The method of claim 12, wherein the descriptions of mission areas further comprise information describing geographical or meteorological conditions pertaining to that mission area.

14. The method of claim 12 or claim 13, further comprising using descriptions of location features that are defined as cylinders with a lateral position, vertical position and radius, and that contain further information regarding the location feature such as a indication of a population centre, height of terrain, or a description of a hazard to be avoided, wherein the further information optionally comprises constraints to be applied to the mission plan.

15. The method of claim 14, further comprising generating edges that connect nodes, and associating a cost with each edge based upon factors including at least one of: distance between the connected nodes, time taken to travel between the connected nodes, fuel consumed to travel between the connected nodes, and constraints contained within a description of a location feature that is defined by a cylinder through which the edge passes.
